# EUROPEAN PATENT APPLICATION

(11) **EP 3 984 783 A1**
(43) Date of publication of application: **20.04.2022**
(21) Application number: 20827570.1
(22) Date of filing: 10.06.2020
(51) Int. Cl.: B60C 15/06, B60C 15/00, B60C 17/00

(54) **RUN-FLAT TIRE**

(30) Priority: 17.06.2019 JP 2019112109
(71) Applicant: BRIDGESTONE CORPORATION, Chuo-ku Tokyo 104-8340 (JP)
(72) Inventor: HASEGAWA Keiichi, Tokyo, 104-8340 (JP)
(74) Representative: Oxley, Robin John George
(86) International application number: PCT/JP2020/022893
(87) International publication number: WO 2020/255832

(57) **Abstract**

A bead portion (60) of a run-flat tire (10) includes a bead core portion (61) having a bead cord (61 a), a first bead filler portion (62) continuous to the bead core portion (61) and provided outside in the tire radial direction of the bead core portion (61), and a second bead filler portion (80) provided outside in the tire width direction of the first bead filler portion (62) via a carcass ply (40). The second bead filler portion (80) is formed of a resin material.

## Description

### [Technical Field]

The present invention relates to a run-flat tire of a side reinforcing rubber type.

### [Background Art]

In a run-flat tire provided with a side reinforcing rubber having a crescent sectional shape, a structure providing an additional reinforcing rubber (called a second apex) in a tire width direction outside of a carcass ply is known for the purpose of improving riding comfort (see Patent Literature 1).

### [Citation List]

### [Patent Literature]

[PTL 1] Japanese Unexamined Patent Application Publication No. 2010-137852

### [Summary of Invention]

Although the run-flat tires described in Patent Literature 1 are assumed to have a certain effect on the improvement of riding comfort, there is a concern that the weight of the run-flat tire may further increase due to the use of additional reinforcing rubber.

Accordingly, an object of the present invention is to provide a run-flat tire having reduced weight while improving riding comfort.

One aspect of the present invention is a run-flat tire (run-flat tire 10) including a tread portion (tread portion 20) in contact with the road surface, a tire side portion (tire side portion 30) continuous to the tread portion and positioned inside in a tire radial direction of the tread portion, a bead portion (bead portion 60) continuous to the tire side portion and positioned inside in the tire radial direction of the tire side portion, and a side reinforcing rubber (side reinforcing rubber 70) provided in the tire side portion. The fun-flat tire includes a carcass ply (carcass ply 40) forming the skeleton of the run-flat tire. The bead portion includes a bead core portion (bead core portion 61) having a bead cord, a first bead filler portion (first bead filler portion 62) continuous to the bead core portion and provided outside in the tire radial direction of the bead core portion, and a second bead filler portion (second bead filler portion 80) provided outside in the tire width direction of the first bead filler portion via the carcass ply. The second bead filler portion is formed of a resin material.

### [Brief Description of Drawings]

FIG. 1 is a cross-sectional view of a run-flat tire 10.
FIG. 2 is a partially enlarged cross-sectional view of the run-flat tire 10.
FIG. 3 is a partially enlarged cross-sectional view of a run-flat tire according to a modified example.
FIG. 4 is a partially enlarged cross-sectional view of a run-flat tire 10 B according to another modified example.

### [Description of Embodiments]

Embodiments will be described below with reference to the drawings. The same functions and configurations are denoted by the same or similar reference numerals, and descriptions thereof are omitted as appropriate.

### (1)Overall structure of tire

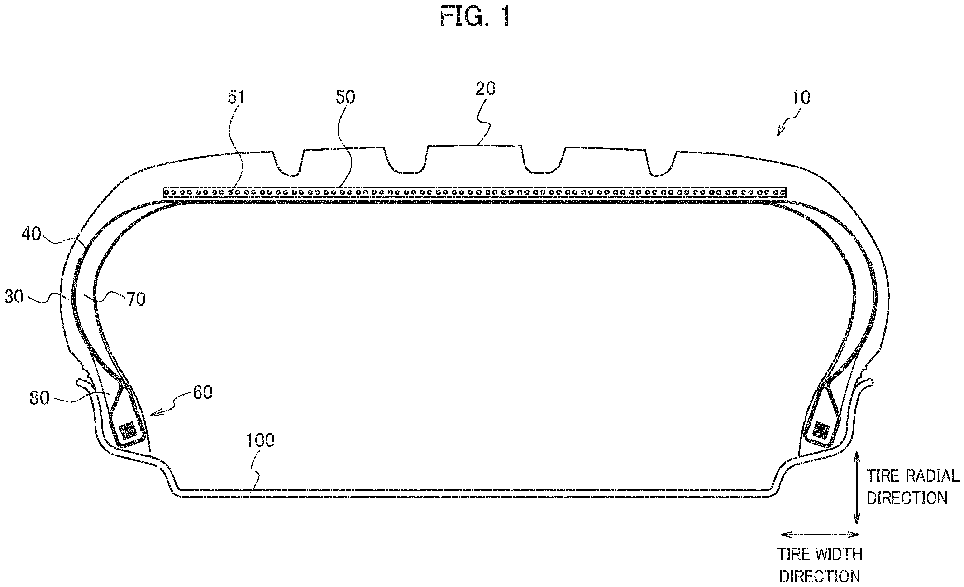

FIG. 1 is a cross-sectional view of the run-flat tire 10 according to the present embodiment. Specifically, FIG. 1 is a cross-sectional view of the run-flat tire 10 along the tire width direction and the tire radial direction. In FIG. 1, the sectional hatching is not shown (hereinafter the same).

The run-flat tire 10 is capable of running (run-flat running) at a constant speed for a certain distance (80 km at 80 km/h) even when the internal pressure (air pressure) is significantly reduced due to a puncture or the like (e.g., 0 kPa).

As shown in FIG. 1, the run-flat tire 10 includes a tread portion 20, a tire side portion 30, a carcass ply 40, a belt layer 50, a bead portion 60, a side reinforcing rubber 70, and a second bead filler portion 80.

The tread portion 20 is a part in contact with a road surface (not shown). On the tread portion 20, a pattern (not shown) corresponding to the use environment of the run-flat tire 10 and the type of vehicle to be mounted is formed.

The tire side portion 30 continues to the tread portion 20 and is positioned inside in the tire radial direction of the tread portion 20. The tire side portion 30 is a region from the tire width direction outside end of the tread portion 20 to the upper end of the bead portion 60. The tire side portion 30 is sometimes referred to as a side wall or the like.

The carcass ply 40 forms a skeleton (tire skeleton) of the run-flat tire 10. The carcass ply 40 has a radial structure in which a carcass cord (not shown) arranged radially along a tire radial direction is covered with a rubber material. However, the present invention is not limited to a radial structure, and a bias structure in which the carcass cords are arranged so as to cross each other in the tire radial direction.

The carcass cord is not particularly limited, and may be formed of an organic fiber cord in the same manner as a tire for a standard passenger car (including minivans and SUV (Sport Utility Vehicles)).

The belt layer 50 is provided inside the tire radial direction of the tread portion 20. The belt layer 50 has a reinforcing cord 51, and the reinforcing cord 51 is a single-layer spiral belt covered with a resin material.

The reinforcing cord 51 can be composed of a monofilament (single wire) such as a metal fiber or an organic fiber or a multifilament (stranded wire) obtained by twisting these fibers. In this embodiment, a steel cord may be used as the reinforcing cord 51.

As the resin for covering the reinforcing cord 51, a resin material having a higher tensile elastic modulus than the tensile elastic modulus of the rubber material constituting the tire side portion 30 and the rubber material constituting the tread portion 20 are used. As the resin for covering the reinforcing cord 51, a thermoplastic resin having elasticity, a thermoplastic elastomer (TPE), a thermosetting resin or the like can be used. It is desirable to use a thermoplastic elastomer in consideration of elasticity in running and moldability in manufacturing.

The thermoplastic elastomer includes a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), a dynamically crosslinked thermoplastic elastomer (TPV), and the like.

Examples of the thermoplastic resin include polyurethane resin, polyolefin resin, vinyl chloride resin, polyamide resin, and the like. Further, as the thermoplastic resin material, for example, a material having a deflection temperature under load (At 0.45 MPa Load) specified in ISO 75 -2 or ASTM D648 of 78 ° C or more, a tensile yield strength specified in JIS K7113 of 10 MPa or more, a tensile fracture elongation specified in JIS K7113 of 50% or more, and a Vicat softening temperature (method A) specified in JIS K7206 of 130 ° C or more can be used.

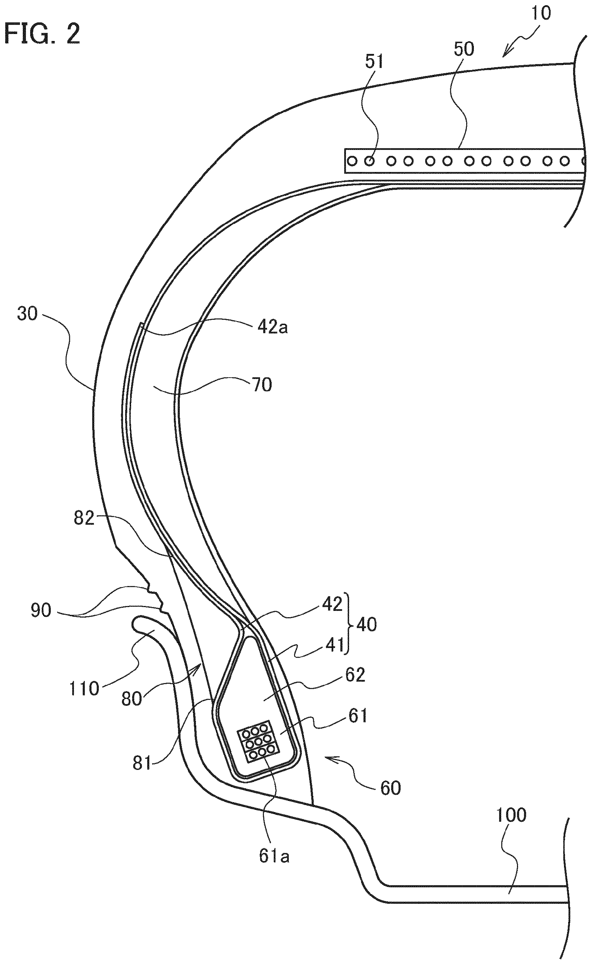

The bead portion 60 continues to tire side portion 30 and is positioned inside in tire radial direction of tire side portion 30. The bead portion 60 is an annular shape extending to the tire circumferential direction. In this embodiment, a bead core portion 61 (not shown in FIG. 1, see FIG. 2) of the bead portion 60 and a first bead filler portion 62 (see FIG. 2) are integrally formed.

A part (excluding the bead cord) of the bead core portion 61 and the first bead filler portion 62 are formed of a resin material. The configuration of bead portion 60 will be described later.

The bead portion 60 is locked to a flange portion 110 (not shown in FIG. 1, see FIG. 2) formed at the radially outside end of the rim wheel 100.

The side reinforcing rubber 70 is provided in the tire side portion 30. The side reinforcing rubber 70 has a crescent shape in cross section, and supports a load of a vehicle (not shown) to which the run-flat tire 10 is mounted when the internal pressure of the run-flat tire 10 greatly decreases.

The side reinforcing rubber 70 may be formed of one or more kinds of rubber materials, or may contain other materials (short fiber, resin, etc.) if the rubber material is a main component.

The second bead filler portion 80 is included in the bead portion 60. The second bead filler portion 80 is provided inside in the tire radial direction rather than the side reinforcing rubber 70 while overlapping with a part the side reinforcing rubber 70. The second bead filler portion 80 is provided outside in the tire radial direction of the carcass ply 40.

The second bead filler portion 80 is formed of a resin material in the same manner as the first bead filler portion 62.

### (2)Bead portion configuration

FIG. 2 is a partially enlarged cross-sectional view of the run-flat tire 10. Specifically, FIG. 2 is a partially enlarged cross-sectional view of the run-flat tire 10 including the bead portion 60 along the tire width direction and the tire radial direction.

As shown in FIG. 2, the carcass ply 40 is folded back to outside in the tire width direction via bead portion 60. Specifically, the carcass ply 40 includes a body portion 41 and a folded portion 42.

The body portion 41 is provided over the tread portion 20, the tire side portion 30 and the bead portion 60, and the body portion 41 is a portion until it is folded back at the bead portion 60, specifically, the bead core portion 61.

The folded portion 42 is continuous to the body portion 41, and the folded portion 42 is a portion where it is folded back to outside in the tire width direction via the bead portion 60, specifically, the bead core portion 61. An end portion 42 a of the folded portion 42 extends until the tire side portion 30.

That is, in the present embodiment, the carcass ply 40 has a high turn-up structure in which the position of the end portion 42 a is positioned near the maximum tire width in the tire side portion 30. However, the carcass ply 40 may have a low turn-up structure in which the end portion 42 a is positioned at the bead portion 60, specifically, the bead core portion 61, the first bead filler portion 62, or the second bead filler portion 80, as described later as a modified example.

As described above, the belt layer 50 is a single-layer spiral belt in which the reinforcing cord 51 is coated with a resin. However, the belt layer 50 is not limited to a single-layer spiral belt. For example, the belt layer 50 may be a 2 layer crossing belt coated with rubber.

A rim line 90 is provided on the outer side face in the tire width direction of the bead portion 60. The rim line 90 is a projection formed along the tire circumferential direction in order to confirm that the bead portion 60 is correctly mounted on a rim wheel 100. In this embodiment, the rim line 90 is provided outside in the tire radial direction about 6 mm from the end portion of the tire radial direction of a flange portion 110.

The bead portion 60 includes the bead core portion 61 and the first bead filler portion 62. As described above, the bead core portion 61 and the first bead filler portion 62 are integrally formed using a resin material.

Specifically, the bead core portion 61 (excluding a bead cord 61 a) and the first bead filler portion 62 are formed of a resin material. As the resin material, the same resin material as that used for the belt layer 50 can be used.

However, the bead core portion 61 and the first bead filler portion 62 may not necessarily be formed of the same resin material as that used for the belt layer 50. In other words, as long as the above-mentioned resin material can be used for the belt layer 50, the resin material used for the belt layer 50, the bead core portion 61 and the first bead filler portion 62 may be different.

The bead core portion 61 has the bead cord 61 a. The bead cord 61 a is formed of a metal material such as steel.

The bead core portion 61 is formed by coating the bead cord 61 a formed of a metal material with a resin.

In this embodiment, the bead cord 61 a is provided so as to have a configuration of 3 x 3 (tire radial direction x tire width direction) in the cross section of the run-flat tire 10 along the tire width direction and the tire radial direction.

The bead cords 61 a are not particularly twisted, and the bead cords 61 a formed by bundling one or a plurality of beads (For example, three along the tire width direction.) are wound around the tire circumferential direction a plurality of times.

The first bead filler portion 62 continuous to the bead core portion 61 and is provided outside in the tire radial direction of the bead core portion 61. The first bead filler portion 62 is provided to fill a gap formed between the body portion 41 and the folded portion 42 of the carcass ply 40. The first bead filler portion 62 is tapered in thickness (width along the tire width direction) as it goes from inside to outside in the tire radial direction.

The bead portion 60 includes the second bead filler portion 80. The second bead filler portion 80 is provided outside in the tire width direction of the first bead filler portion 62.

In this embodiment, the second bead filler portion 80 is provided outside in the tire width direction of the first bead filler portion 62 via the carcass ply 40. More specifically, the second bead filler portion 80 is provided outside in the tire width direction of the folded portion 42 of the carcass ply 40. That is, the folded portion 42 is positioned between the first bead filler portion 62 and the second bead filler portion 80.

Therefore, the folded portion 42 is sandwiched between the first bead filler portion 62 and the second bead filler portion 80, and the deformation and displacement of the carcass ply 40 are restricted.

As described above, the carcass ply 40 may have a low turn-up structure, and when the low turn-up structure is employed, the folded portion 42 may not be positioned between the first bead filler portion 62 and the second bead filler portion 80. In this case, the second bead filler portion 80 may contact the body portion 41 of the carcass ply 40.

Further, when the low turn-up structure is employed, the folded portion 42 may be provided outside in the tire width direction of the second bead filler portion 80 without being positioned between the first bead filler portion 62 and the second bead filler portion 80.

The second bead filler portion 80 is also formed of a resin material, as is the case with the first bead filler portion 62. As the resin material, the same resin material as that used for the belt layer 50 can be used. The elastic modulus of the second bead filler portion 80 may be higher than that of the belt layer 50, and the elastic modulus may be adjusted appropriately.

However, the second bead filler portion 80 may not necessarily be formed of the same resin material as that used for the belt layer 50. In other words, as long as the above-mentioned resin material can be used for the belt layer 50, the resin material used for the belt layer 50 and the second bead filler portion 80 may be different.

An inside end 81 in the radial direction of the second bead filler portion 80 is preferably positioned near the inside end of the tire radial direction of the tapered first bead filler portion 62. However, the inside end 81 may extend until the bead core portion 61.

An outside end 82 in the radial direction of the second bead filler portion 80 is preferably positioned outside in the tire radial direction rather than the rim line 90 corresponding to the flange portion 110.

Further, the outside end 82 is preferably positioned outside in the tire radial direction rather than the inside end in the tire radial direction of the side reinforcing rubber 70.

The second bead filler portion 80 is formed as a separate body from the integrally formed bead core portion 61 and the first bead filler portion 62. However, if there is no manufacturing problem, the bead core portion 61, the first bead filler portion 62, and the second bead filler portion 80 may be integrally formed.

The second bead filler portion 80 is annular like the bead core portion 61 and the first bead filler portion 62 which are integrally formed. In the manufacturing process, after the folded portion 42 of the carcass ply 40 has folded back via the bead core portion 61, the second bead filler portion 80 is fitted from outside in the tire width direction.

### (3)Function and effects

According to the above-described embodiment, the following effects can be obtained. Specifically, the bead portion 60 of the run-flat tire 10 includes the bead core portion 61, the first bead filler portion 62, and the second bead filler portion 80. The second bead filler portion 80 provided outside in the tire width direction of the first bead filler portion 62 is formed of a resin material similar to that of the belt layer 50.

Conventionally, in a pneumatic tire including a run-flat tire, a structure is known in which a reinforcing member (called second bead filler or second apex) formed by using a rubber material harder than rubber forming other parts is provided outside in the tire width direction of the carcass ply 40.

However, such a conventional reinforcing member is formed of a rubber material, and the weight is increased when compared with the resin material.

In the run-flat tire 10, the second bead filler portion 80 made of resin is used, and contributes to weight reduction of the run-flat tire 10. Further, since the second bead filler portion 80 can control the longitudinal springiness of the run-flat tire 10, it contributes to the improvement of riding comfort. That is, the run-flat tire 10 can achieve weight reduction while improving riding comfort. The weight reduction contributes to the improvement of riding comfort, but it is also preferable from the viewpoint of improving rolling resistance and fuel efficiency.

Further, the second bead filler portion 80 made of resin has a higher elastic modulus than a conventional rubber reinforcing member. Therefore, the same strength can be secured while suppressing the size (volume) of the second bead filler portion 80. This makes it possible to further reduce the weight and improve riding comfort.

The second bead filler portion 80 made of resin does not flow in a manufacturing process (vulcanization process) like a rubber material, and can be easily manufactured in a tire shape as designed. Thus, a high quality run-flat tire can be stably supplied while suppressing variation in quality.

Further, as described above, the size (volume) of the second bead filler portion 80 made of resin can be adjusted to easily control the performance such as the longitudinal springiness applied to the run-flat tire 10. Thus, the run-flat tire 10 having a desired performance can be easily manufactured.

In this embodiment, the folded portion 42 is positioned between the first bead filler portion 62 and the second bead filler portion 80. Therefore, the folded portion 42 is sandwiched between the first bead filler portion 62 and the second bead filler portion 80, and the deformation and displacement of the carcass ply 40 are restricted. In particular, the highly elastic second bead filler portion 80 can effectively regulate the excessive deformation and displacement of the carcass ply 40. This can contribute to further improvement of riding comfort and improvement of steering stability.

In this embodiment, the bead core portion 61 and the first bead filler portion 62 are also formed of a resin material. This contributes to further weight reduction of the run-flat tire 10 and further improves rolling resistance, fuel efficiency, etc. Further, since the bead core portion 61, the first bead filler portion 62, and the second bead filler portion 80 are made of resin, the performance can be more easily controlled.

In this embodiment, the inside end 81 of the second bead filler portion 80 in the tire radial direction is positioned near the inside end in the tire radial direction of the tapered first bead filler portion 62, and the outside end 82 of the second bead filler portion 80 in tire radial direction is positioned outside in the tire radial direction than the rim line 90 corresponding to the flange portion 110.

Since the second bead filler portion 80 is thus provided in the main region of the bead portion 60, in particular, sufficient longitudinal springiness of the run-flat tire 10 during run-flat traveling can be demonstrated in combination with the bead core portion 61, the first bead filler portion 62 and side reinforcing rubber 70.

### (4)Other Embodiments

Although the contents of the present invention have been described above in accordance with the embodiments, the present invention is not limited to these descriptions, and it is obvious to those skilled in the art that various modifications and improvements can be made.

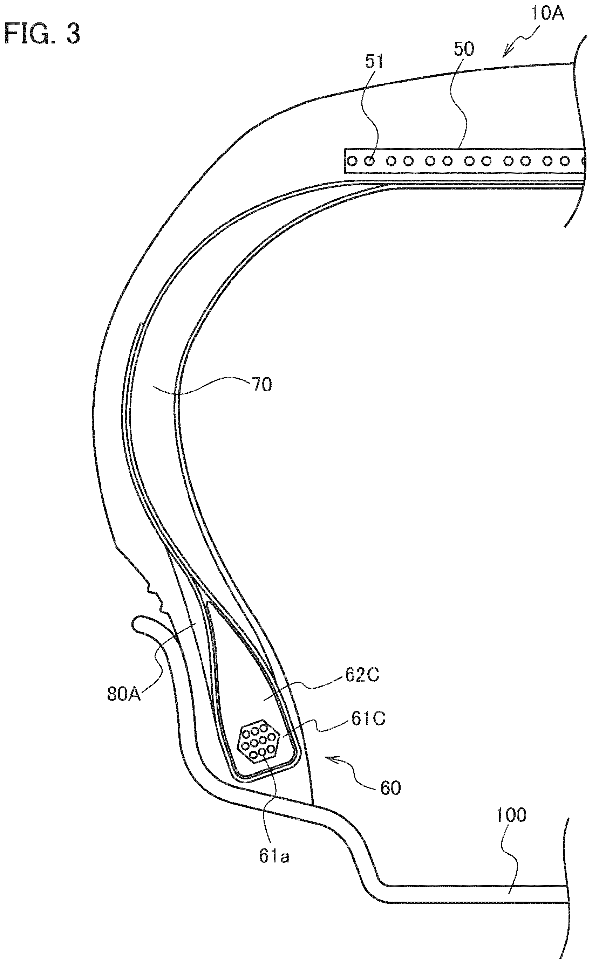

For example, the configuration of the run-flat tire 10 may be modified as follows. FIG. 3 is a partially enlarged cross-sectional view of a run-flat tire 10 A according to a modified example. Specifically, FIG. 3 is a partially enlarged cross-sectional view of the run-flat tire 10 including the bead portion 60 along the tire width direction and the tire radial direction.

As shown in FIG. 3, the shape and structure of a bead core portion 61 C and a first bead filler portion 62 C of the run-flat tire 10 A are different from those of the bead core portion 61 and the first bead filler portion 62 of the run-flat tire 10.

The bead core portion 61 C and the first bead filler portion 62 C are formed of a rubber material as a main material like a pneumatic tire including a conventional run-flat tire. The bead cords 61 a may be formed of widely used steel strands or may be formed of a single wire steel cord similar to the bead core portion 61.

The shapes of the bead core portion 61 C and the first bead filler portion 62 C are different from those of the bead core portion 61 and the first bead filler portion 62, and accordingly, the shapes of a side reinforcing rubber 70 A and a second bead filler portion 80 A are different from each other.

The second bead filler portion 80 A is formed of a resin material similar to the second bead filler portion 80 of the run-flat tire 10. Although the second bead filler portion 80 A is less thick than the second bead filler portion 80, the thickness and shape of the second bead filler portion may be changed in accordance with the shape of the surrounding member.

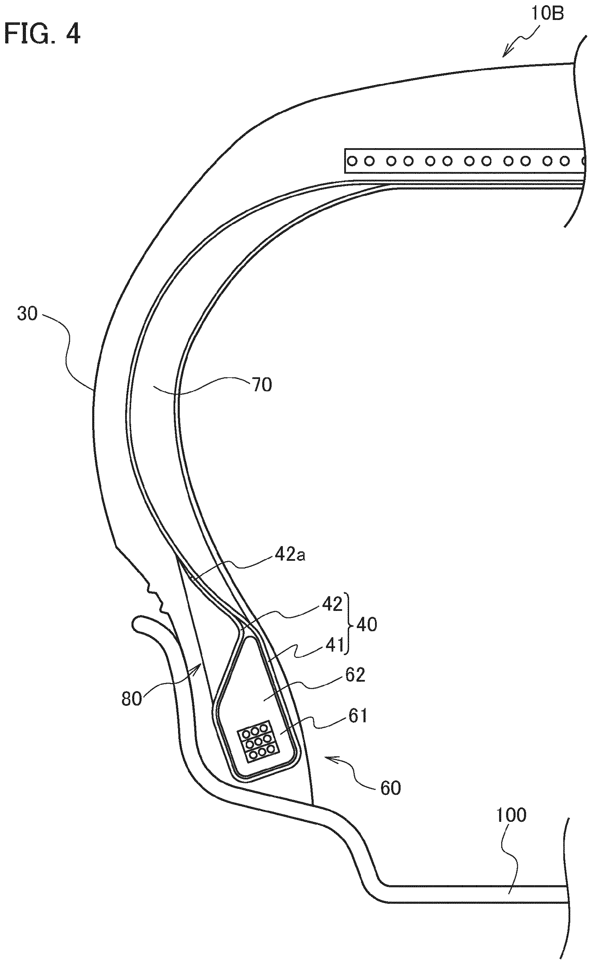

FIG. 4 is a partially enlarged cross-sectional view of a run-flat tire 10 B according to another modified example. Specifically, FIG. 4 is a partially enlarged cross-sectional view of the run part -flat tire 10 B including the bead portion 60 along the tire width direction and the tire radial direction.

As shown in FIG. 4, in the run-flat tire 10 B, the end portion 42 a of the folded portion 42 of the carcass ply 40 in the tire radial direction is positioned at the second bead filler portion 80. Such a structure may be referred to as a low turn-up structure. Thus, the position of the end portion 42 a of the folded portion 42 in the tire radial direction is not particularly limited.

Furthermore, as described above, the belt layer 50 is not limited to a single-layer spiral belt. For example, the belt layer 50 may be a 2 layer crossing belt coated with rubber.

As noted above, embodiments of the invention have been described, but it should not be understood that the statements and drawings that make up part of this disclosure limit the invention. Various alternative embodiments, embodiments and operational techniques will become apparent to those skilled in the art from this disclosure.

### [Reference Signs List]

10, 10 A, 10 B Run-flat tire
20 Tread portion
30 Tire side portion
40 Carcass ply
41 Body portion
42 Folded portion
42 a End portion
50 Belt layer
51 Reinforcement cord
60 Bead portion
61, 61 C Bead core portions
61 a Bead cord
62, 62 C First bead filler portion
70 , 70 A Side reinforcing rubber
80, 80 A Second bead filler portion
81 Inside end
82 Outside end
90 Rim line
100 Rim wheel
110 Flange portion

## Claims

1. A run-flat tire comprising:
a tread portion in contact with the road surface;
a tire side portion continuous to the tread portion and positioned inside in a tire radial direction of the tread portion;
a bead portion continuous to the tire side portion and positioned inside in the tire radial direction of the tire side portion; and
a side reinforcing rubber provided in the tire side portion, wherein the fun-flat tire comprises a carcass ply forming the skeleton of the run-flat tire, wherein
the bead portion comprises:
a bead core portion having a bead cord;
a first bead filler portion continuous to the bead core portion and provided outside in the tire radial direction of the bead core portion; and
a second bead filler portion provided outside in the tire width direction of the first bead filler portion via the carcass ply, wherein
the second bead filler portion is formed of a resin material.

2. The run-flat tire according to claim 1, wherein the carcass ply comprises:
a body portion, and
a folded portion continuous to the body portion and folded back to outside in the tire width direction via the bead portion, wherein
the folded portion is positioned between the first bead filler portion and the second bead filler portion.

3. The run-flat tire according to claim 1 or 2, wherein the first bead filler portion is formed of a resin material.

4. The run-flat tire according to any one of claims 1 to 3, wherein the bead core portion is formed by coating the bead cord with a resin material.
